# EUROPEAN PATENT APPLICATION

(11) **EP 4 807 439 A1**
(43) Date of publication of application: **16.09.2026**
(21) Application number: 23958029.3
(22) Date of filing: 10.11.2023
(51) Int. Cl.: G02F 1/1343, G02F 1/13

(54) **SWITCHABLE LENS ARRAY, 2D/MULTI-VIEW SWITCHABLE LENS DISPLAY, AND METHODS**

(71) Applicant: Leia Inc., Menlo Park, CA (US); Leia Electronics (Suzhou) Co., Ltd., Suzhou, Jiangsu 215500 (CN)
(72) Inventor: ZHANG, Xiaojun, Suzhou, Jiangsu 215500 (CN); WU, Li, Suzhou, Jiangsu 215500 (CN); DAI, Ariel, Suzhou, Jiangsu 215500 (CN)
(74) Representative: Carpmaels & Ransford LLP
(86) International application number: PCT/CN2023/130973
(87) International publication number: WO 2025/097424

(57) **Abstract**

The invention provides a switchable lenticular lens array comprising: a first material layer having a fixed refractive index; a second material layer having an electrically controlled refractive index; and electrodes configured to deliver a voltage or a current to switch the state of switchable lenticular lenses of the switchable lenticular lens array, wherein the electrodes include an upper electrode and a lower electrode; wherein the second material layer is disposed in an electric field in a first direction when a first electrical potential is applied between the electrodes such that the electrically controlled refractive index of the second material layer is switched to a refractive index that matches the fixed refractive index. The present disclosure also provides a method of operating a switchable lenticular lens array, a 2D/multiview switchable lenticular display, and a method of operating a 2D/multiview switchable lenticular display.

## Description

### TECHNICAL FIELD

The present disclosure relates to a field of displaying technology, and more particularly to a switchable lenticular lens array, a method of operating the switchable lenticular lens array, a 2D/multiview switchable lenticular display, and a method of operating the 2D/multiview switchable lenticular display.

### BACKGROUND

Electronic displays are an almost ubiquitous medium for communicating information to users of a wide variety of device and products. A known display uses a lens arrangement as an imaging apparatus. For example, the lens may direct two-dimensional image slices from associated display pixels to the left and right eyes of the user in front of the lens, respectively, so that the user observes a single stereoscopic image. In order to enable the display to display both two-dimensional (2D) image content (2D display mode) and three-dimensional (3D) image content (3D display mode), one way is to provide an electrically switchable lenticular lens array. In order to display 2D and 3D image contents, the electrically switchable lenticular lens array is formed of an electro-optic material (e.g., liquid crystal) switchable at different refractive indices. In conventional applications, the display will continue to display 3D image content for a relatively long time after switching to display 3D image content, and will also continue to display 2D image content for a relatively long time after switching to display 2D image content. Such applications have no strict requirements on the response time for switching refractive index of electro-optic materials. A switchable lenticular lens array, however, may find limited use in many practical applications given the refractive index switching speed limitation of electro-optic materials.

### SUMMARY

In order to implement applications that require a switchable lenticular lens array with a switching response time as short as possible, such as achieving a hybrid display mode of a display, for example, alternately displaying two-dimensional (2D) content and three-dimensional (3D) content at a certain frequency, the present disclosure provides a switchable lenticular lens array, a method of operating the switchable lenticular lens array, a 2D/multiview switchable lenticular display, and a method of operating the 2D/multiview switchable lenticular display.

According to a first aspect of the present disclosure, there is provided a switchable lenticular lens array, the switchable lenticular lens array comprising:
a first material layer having a fixed refractive index;
a second material layer having an electrically controlled refractive index; and
electrodes configured to deliver a voltage or a current to switch the state of switchable lenticular lenses of the switchable lenticular lens array, wherein the electrodes include an upper electrode and a lower electrode;
wherein the second material layer is disposed in an electric field in a first direction when a first electrical potential is applied between the electrodes such that the electrically controlled refractive index of the second material layer is switched to a refractive index that matches the fixed refractive index.

According to some embodiments of the present disclosure, the second material layer is disposed in an electric field in a second direction when a second electrical potential is applied between the electrodes such that the electrically controlled refractive index of the second material layer switches to a refractive index different from the fixed refractive index, wherein the second direction is orthogonal to the first direction.

According to some embodiments of the present disclosure, the first material layer comprises fixed lenses of the switchable lenticular lens array, and the second material layer is in contact with the first material layer and fills in shapes of the fixed lenses of the switchable lenticular lens array.

According to some embodiments of the present disclosure, the first material layer and the second material layer are disposed between the upper electrode and the lower electrode.

According to some embodiments of the present disclosure, one of the upper electrode and the lower electrode covers an entire area of the switchable lenticular lens array, and the other of the upper electrode and the lower electrode comprises a first set of electrodes and a second set of electrodes interleaved over the entire area of the switchable lenticular lens array, wherein the first electrical potential is applied between the first set of electrodes and the second set of electrodes.

According to some embodiments of the present disclosure, the upper electrode and the lower electrode each comprises a first set of electrodes and a second set of electrodes interleaved over an entire area of the switchable lenticular lens array, wherein the first electrical potential is applied between the first set of electrodes and the second set of electrodes of the upper electrode and/or between the first set of electrodes and the second set of electrodes of the lower electrode.

According to some embodiments of the present disclosure, the first set of electrodes and the second set of electrodes each comprises strip electrodes that are spaced apart from one another, the strip electrodes of the first set of electrodes and the strip electrodes of the second set of electrodes are interleaved with each other over the entire area of the switchable lenticular lens array.

According to some embodiments of the present disclosure, the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

According to some embodiments of the present disclosure, one of the first layer of electrodes and the second layer of electrodes that covers the entire area of the switchable lenticular lens array has a hollow pattern.

According to some embodiments of the present disclosure, the first set of electrodes and the second set of electrodes are arranged in the same layer, the electrodes in the first set of electrodes and the electrodes in the second set of electrodes are interleaved with each other, and a gap is provided between electrodes in the first set of electrodes and adjacent electrodes in the second set of electrodes.

According to a second aspect of the present disclosure, there is provided a method of operating a switchable lenticular lens array comprising a first material layer having a fixed refractive index, a second material layer having an electrically controlled refractive index, and electrodes, wherein the method comprises:
applying a first electrical potential between the electrodes so that the second material layer is in an electric field in a first direction, so as to switch the electrically controlled refractive index of the second material layer to a refractive index that matches the fixed refractive index.

According to some embodiments of the present disclosure, the method of operating the switchable lenticular lens array comprises applying a second electrical potential between the electrodes so that the second material layer is in an electric field in a second direction, so as to switch the electrically controlled refractive index of the second material layer to a refractive index different from the fixed refractive index, wherein the second direction is orthogonal to the first direction.

According to a third aspect of the present disclosure, there is provided a 2D/multiview switchable lenticular display, comprising:
a display panel having an array of display pixels;
a switchable lenticular lens array for directing outputs from different pixels of the array of display pixels to spatial positions for displaying a two-dimensional (2D) image or a multiview image, wherein the switchable lenticular lens array comprises:
   a first material layer having a fixed refractive index;
   a second material layer having an electrically controlled refractive index; and
   electrodes configured to deliver a voltage or a current to switch the state of switchable lenticular lenses of the switchable lenticular lens array, wherein the electrodes include an upper electrode and a lower electrode; and
a controller configured to apply a first electrical potential between the electrodes when the display panel provides 2D image content such that the second material layer is in an electric field in a first direction, so as to switch the electrically controlled refractive index of the second material layer to a refractive index that matches the fixed refractive index.

According to some embodiments of the present disclosure, the controller is configured to apply a second electrical potential between the electrodes when the display panel provides multiview image content such that the second material layer is in an electric field in a second direction, so as to switch the electrically controlled refractive index of the second material layer to a refractive index different from the fixed refractive index, wherein the second direction is orthogonal to the first direction.

According to some embodiments of the present disclosure, the first material layer comprises fixed lenses of the switchable lenticular lens array, and the second material layer is in contact with the first material layer and fills in shapes of the fixed lenses of the switchable lenticular lens array.

According to some embodiments of the present disclosure, the first material layer and the second material layer are disposed between the upper electrode and the lower electrode.

According to some embodiments of the present disclosure, one of the upper electrode and the lower electrode covers an entire area of the switchable lenticular lens array, and the other of the upper electrode and the lower electrode comprises a first set of electrodes and a second set of electrodes interleaved over the entire area of the switchable lenticular lens array, wherein the first electrical potential is applied between the first set of electrodes and the second set of electrodes.

According to some embodiments of the present disclosure, the upper electrode and the lower electrode each comprises a first set of electrodes and a second set of electrodes interleaved over an entire area of the switchable lenticular lens array, wherein the first electrical potential is applied between the first set of electrodes and the second set of electrodes of the upper electrode and/or between the first set of electrodes and the second set of electrodes of the lower electrode.

According to some embodiments of the present disclosure, the first set of electrodes and the second set of electrodes each comprises strip electrodes that are spaced apart from one another, the strip electrodes of the first set of electrodes and the strip electrodes of the second set of electrodes are interleaved with each other over the entire area of the switchable lenticular lens array.

According to some embodiments of the present disclosure, the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

According to some embodiments of the present disclosure, one of the first layer of electrodes and the second layer of electrodes that covers the entire area of the switchable lenticular lens array has a hollow pattern.

According to some embodiments of the present disclosure, the first set of electrodes and the second set of electrodes are arranged in the same layer, the electrodes in the first set of electrodes and the electrodes in the second set of electrodes are interleaved with each other, and a gap is provided between electrodes in the first set of electrodes and adjacent electrodes in the second set of electrodes.

According to a third aspect of the present disclosure, there is provided a method of operating a 2D/multiview switchable lenticular display comprising a display panel and a switchable lenticular lens array comprising a first material layer having a fixed refractive index, a second material layer having an electrically controlled refractive index, and electrodes, wherein the method comprises:
providing two-dimensional (2D) image content and multiview image content using a display panel;
applying a first electrical potential between the electrodes when the display panel provides the 2D image content so that the second material layer is in an electric field in a first direction, so as to switch the electrically controlled refractive index of the second material layer to a refractive index that matches the fixed refractive index.

According to some embodiments of the present disclosure, the method of operating the 2D/multiview switchable lenticular display comprises applying a second electrical potential between the electrodes when the display panel provides the multiview image content such that the second material layer is in an electric field in a second direction, so as to switch the electrically controlled refractive index of the second material layer to a refractive index different from the fixed refractive index, wherein the second direction is orthogonal to the first direction.

In the above aspects of the present disclosure, a switching response time from a 2D display mode to a multiview/3D display mode and a switching response time from the multiview/3D display mode to the 2D display mode of the switchable lenticular lens array are shortened, and the overlapping of a 2D frame and a multiview frame, for example, displaying multiview image content in a 2D mode is avoided by applying electric fields in different directions on the switchable lenticular lens array, to achieve good display performance of the full screen in the hybrid display mode.

### BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:
FIG. 1A illustrates a perspective view of a multiview display in an example, according to an embodiment consistent with the principles described herein.
FIG. 1B illustrates a graphical representation of the angular components of a light beam having a particular principal angular direction in an example, according to an embodiment consistent with the principles described herein.
FIG. 2 illustrates a side view of a 2D/multiview switchable lenticular display in an example, according to an embodiment consistent with the principles described herein.
FIG. 3 illustrates a block diagram of a 2D/multi-view switchable lenticular lenses system in an example, according to an embodiment consistent with the principles described herein.
FIG. 4A illustrates a schematic diagram of a switchable lenticular lens array in an OFF state in an example, according to an embodiment consistent with the principles described herein.
FIG. 4B illustrates a schematic diagram of a switchable lenticular lens array in an ON state in an example, according to an embodiment consistent with the principles described herein.
FIG. 5A illustrates a schematic diagram of a composite image perceived by a user in an example, according to an embodiment consistent with the principles described herein.
FIG. 5B illustrates a schematic diagram of an example 2D/multiview switchable lenticular display switching between a 2D mode and a multi-view mode, according to an embodiment consistent with the principles described herein.
FIG. 6A illustrates a cross-sectional view of a switchable lenticular lens array in an OFF state in an example, according to another embodiment consistent with the principles described herein.
FIG. 6B illustrates a cross-sectional view of a switchable lenticular lens array in an ON state in an example, according to another embodiment consistent with the principles described herein.
FIG. 6C illustrates a cross-sectional view of a switchable lenticular lens array in an OFF state in another example, according to another embodiment consistent with the principles described herein.
FIG. 6D illustrates a cross-sectional view of a switchable lenticular lens array in an ON state in another example, according to another embodiment consistent with the principles described herein.
FIG. 7 illustrates a flowchart of a method of operating a switchable lenticular lens array in an example, according to an embodiment consistent with the principles described herein.
FIG. 8 illustrates a flowchart of a method of operating a switchable lenticular display in an example, according to an embodiment consistent with the principles described herein.

Certain examples and embodiments may have other features that are one of in addition to and in lieu of the features illustrated in the above-referenced figures. These and other features are detailed below with reference to the above-referenced figures.

### DETAILED DESCRIPTION OF THE INVENTION

Examples and embodiments in accordance with the principles described herein provide a switchable lenticular lens array with application to displaying two-dimensional (2D) images, multiview or three-dimensional (3D) images, and mixed-content 2D/multiview hybrid images, methods of operating a switchable lenticular lens array, a 2D/multiview switchable lenticular display, and methods of operating a 2D/multiview switchable lenticular display. In particular, according to the principles described herein, a lenticular display may employ a switchable medium surrounding the lenses in a lenticular array of a lenticular display. The switchable medium (e.g., birefringent liquid crystal medium) is used to effectively switch on and off various lenses of a lenticular array of the lenticular display. By switching on and off the various lenses, images having only 2D content, only multiview content or a combination or 2D/multiview mixed-content may be provided. According to various embodiments, a 2D/multiview switchable lenticular display comprises a backlight, a light valve array (e.g., a liquid crystal panel), and a switchable lenticular lens array. The 2D/multiview switchable lenticular display may be operated in various modes including a 2D mode configured to provide a 2D image, a multiview mode configured to provide a multiview image, and a 2D/multiview hybrid mode configured to provide a 2D/3D hybrid image. In addition, the 2D/multiview hybrid mode may include one or both of zonal mixing and temporal mixing to provide the 2D/3D hybrid image, according to various embodiments.

According to various embodiments, the multiview mode of a 2D/multiview switchable lenticular display may provide a so-called "glasses-free" or autostereoscopic image, while the 2D mode may facilitate the presentation of 2D information or content at a relatively higher native resolution than that is available in the multiview mode, especially where the 2D information or content that does not include or benefit from a third dimension. As such, the composite image provided through time-multiplexing the 2D and multiview modes may provide both high resolution 2D content and somewhat lower resolution, multiview or 3D content simultaneously in the same image or on the same display. Uses of 2D/multiview switchable lenticular displays described herein include, but are not limited to, mobile phones (e.g., smartphones), watches, tablet computers, mobile computers (e.g., laptop computers), personal computers and computer monitors, automotive display consoles, camera displays, and various other mobile as well as substantially non-mobile display applications and devices.

Herein, a 'two-dimensional (2D) display' or equivalently a 2D mode of a multi-mode display is defined as a display or mode configured to provide a view of an image that is substantially the same regardless of a direction from which the image is viewed (i.e., within a predefined viewing angle or range of the 2D display or 2D mode). A traditional liquid crystal display (LCD) found in many smart phones and computer displays is an example of 2D displays. In contrast, herein, a multiview mode of a 'multiview display' or equivalently a display mode of a multimode display is defined as an electronic display, display system, or display mode of a multimode display configured to provide different views of a multiview image in or from different view directions. In particular, the different views may represent different perspective views of a scene or object of the multiview image. In some instances, a multiview display or multiview mode may also be referred to as a three-dimensional (3D) display or 3D mode, e.g., when simultaneously viewing two different views of the multiview image provides a perception of viewing a three-dimensional image.

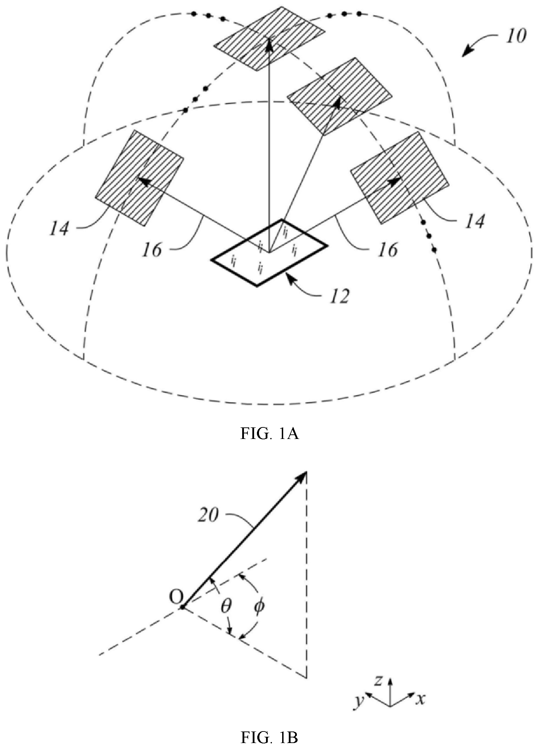

FIG. 1A illustrates a perspective view of a multiview display 10 (or a multiview mode of a multimode display) in an example, according to an embodiment consistent with the principles described herein. As illustrated in FIG. 1A, the multiview display 10 comprises a screen 12 to display a multiview image to be viewed. The multiview display 10 provides different views 14 of the multiview image in different view directions 16 relative to the screen 12. The view directions 16 are illustrated as arrows extending from the screen 12 in various different principal angular directions; the different views 14 are illustrated as shaded polygonal boxes at the termination of the arrows (i.e., depicting view directions 16); and only four views 14 and four view directions 16 are illustrated, all by way of example and not limitation. Note that while the different views 14 are illustrated in FIG. 1A as being above the screen, the views 14 actually appear on or in a vicinity of the screen 12 when the multiview image is displayed on the multiview display 10. Depicting the views 14 above the screen 12 is only for simplicity of illustration and is meant to represent viewing the multiview display 10 from a respective one of the view directions 16 corresponding to a particular view 14.

A view direction or equivalently a light beam having a direction corresponding to a view direction of a multiview display generally has a principal angular direction given by angular components {*θ*, *φ*}, by definition herein. The angular component *θ* is referred to herein as the 'elevation component' or 'elevation angle' of the light beam. The angular component *φ* is referred to as the 'azimuthal component' or 'azimuthal angle' of the light beam. By definition, the elevation angle *θ* is an angle in a vertical plane (e.g., perpendicular to a plane of the multiview display screen) while the azimuth angle *φ* is an angle in a horizontal plane (e.g., parallel to the multiview display screen plane).

Figure 1B illustrates a graphical representation of the angular components {*θ*, *φ*} of a light beam 20 having a particular principal angular direction or simply 'direction' corresponding to a view direction (e.g., view direction 16 in FIG. 1A) of a multiview display in an example, according to an embodiment consistent with the principles described herein. In addition, the light beam 20 is emitted or emanates from a particular point, by definition herein. That is, by definition, the light beam 20 has a central ray associated with a particular point of origin within the multiview display. FIG. 1B also illustrates the light beam (or view direction) point of the origin O.

Further herein, the term 'multiview' as used in the terms 'multiview image', 'multiview display' and 'multiview mode' is defined as a plurality of views representing different perspectives or including angular disparity between views of the plurality of views. In addition, herein the term 'multiview' explicitly includes more than two different views (i.e., a minimum of three views and generally more than three views), by definition herein. As such, 'multiview display' and 'multiview mode' as employed herein is explicitly distinguished from a stereoscopic display or stereoscopic mode that include only two different views to represent a scene or an image. Note however, while multiview images and multiview displays may include more than two views, by definition herein, multiview images may be viewed (e.g., on a multiview display) as a stereoscopic pair of images by selecting only two of the multiviews to view at a time (e.g., one view per eye).

A 'multiview pixel' is defined herein as a set of sub-pixels or 'view' pixels in each of a similar plurality of different views of a multiview display or of a multimode display during a multiview mode. In particular, a multiview pixel may have individual view pixels corresponding to or representing a view pixel in each of the different views of the multiview image. Moreover, the view pixels of the multiview pixel are so-called 'directional pixels' in that each of the view pixels is associated with a predetermined view direction of a corresponding one of the different views, by definition herein. Further, according to various examples and embodiments, the different view pixels of a multiview pixel may have equivalent or at least substantially similar locations or coordinates in each of the different views. For example, a first multiview pixel may have individual view pixels located at {*x*1, *y*1} in each of the different views of a multiview image, while a second multiview pixel may have individual view pixels located at {*x*2, *y*2} in each of the different views, and so on.

Herein, a 'light guide' is defined as a structure that guides light within the structure using total internal reflection or 'TIR'. In particular, the light guide may include a core that is substantially transparent at an operational wavelength of the light guide. In various examples, the term 'light guide' generally refers to a dielectric optical waveguide that employs total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some embodiments, the light guide may include a coating in addition to or instead of the aforementioned refractive index difference to further facilitate the total internal reflection. The coating may be a reflective coating, for example. The light guide may be any of several light guides including, but not limited to, one or both of a plate or slab guide and a strip guide.

Further herein, the term 'plate' when applied to a light guide as in a 'plate light guide' is defined as a piecewise or differentially planar layer or sheet, which is sometimes referred to as a 'slab' guide. In particular, a plate light guide is defined as a light guide configured to guide light in two substantially orthogonal directions bounded by a top surface and a bottom surface (i.e., opposite surfaces) of the light guide. Further, by definition herein, the top and bottom surfaces are both separated from one another and may be substantially parallel to one another in at least a differential sense. That is, within any differentially small section of the plate light guide, the top and bottom surfaces are substantially parallel or co-planar.

Herein a 'collimator' is defined as substantially any optical device or apparatus that is configured to collimate light. For example, a collimator may include, but is not limited to, a collimating mirror or reflector, a collimating lens, a diffraction grating, and various combinations thereof. In some embodiments, the collimator comprising a collimating reflector may have a reflecting surface characterized by a parabolic curve or shape. In another example, the collimating reflector may comprise a shaped parabolic reflector. By 'shaped parabolic' it is meant that a curved reflecting surface of the shaped parabolic reflector deviates from a 'true' parabolic curve in a manner determined to achieve a predetermined reflection characteristic (e.g., a degree of collimation). Similarly, a collimating lens may comprise a spherically shaped surface (e.g., a biconvex spherical lens).

In some embodiments, the collimator may be a continuous reflector or a continuous lens (i.e., a reflector or lens having a substantially smooth, continuous surface). In other embodiments, the collimating reflector or the collimating lens may comprise a substantially discontinuous surface such as, but not limited to, a Fresnel reflector or a Fresnel lens that provides light collimation. According to various embodiments, an amount of collimation provided by the collimator may vary in a predetermined degree or amount from one embodiment to another. Further, the collimator may be configured to provide collimation in one or both of two orthogonal directions (e.g., a vertical direction and a horizontal direction). That is, the collimator may include a shape in one or both of two orthogonal directions that provides light collimation, according to some embodiments.

Herein, a 'collimation factor' is defined as a degree to which light is collimated. In particular, a collimation factor defines an angular spread of light rays within a collimated beam of light, by definition herein. For example, a collimation factor s may specify that a majority of light rays in a beam of collimated light is within a particular angular spread (e.g., +/-σ degrees about a central or principal angular direction of the collimated light beam). The light rays of the collimated light beam may have a Gaussian distribution in terms of angle and the angular spread be an angle determined by at one-half of a peak intensity of the collimated light beam, according to some examples.

Herein, a 'light source' is defined as a source of light (e.g., an optical emitter configured to produce and emit light). For example, the light source may comprise an optical emitter such as a light emitting diode (LED) that emits light when activated or turned on. In particular, herein the light source may be substantially any source of light or comprise substantially any optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by the light source may have a color (i.e., may include a particular wavelength of light), or may be a range of wavelengths (e.g., white light). In some embodiments, the light source may comprise a plurality of optical emitters. For example, the light source may include a set or group of optical emitters in which at least one of the optical emitters produces light having a color, or equivalently a wavelength, that differs from a color or wavelength of light produced by at least one other optical emitter of the set or group. The different colors may include primary colors (e.g., red, green, blue) for example.

Herein, a 'multiview image' is defined as a plurality of images (i.e., greater than three images) wherein each image of the plurality represents a different view corresponding to a different view direction of the multiview image. As such, the multiview image is a collection of images (e.g., two-dimensional images) which, when display on a multiview display, may facilitate a perception of depth and thus appear to be an image of a 3D scene to a viewer, for example. A multiview image that provides pairs of views that represent different but related perspectives of a 3D scene consistent with viewing by a viewer is defined as a 3D image.

By definition, 'broad-angle' emitted light is defined as light having a cone angle that is greater than a cone angle of the view of a multiview image or multiview display. In particular, in some embodiments, the broad-angle emitted light may have a cone angle that is greater than about twenty degrees (e.g., > ± 20°). In other embodiments, the broad-angle emitted light cone angle may be greater than about thirty degrees (e.g., > ± 30°), or greater than about forty degrees (e.g., > ± 40°), or greater than fifty degrees (e.g., > ± 50°). For example, the cone angle of the broad-angle emitted light may be about sixty degrees (e.g., > ± 60°).

In some embodiments, the broad-angle emitted light cone angle may defined to be about the same as a viewing angle of an LCD computer monitor, an LCD tablet, an LCD television, or a similar digital display device meant for broad-angle viewing (e.g., about ± 40-65°). In other embodiments, broad-angle emitted light may also be characterized or described as diffuse light, substantially diffuse light, non-directional light (i.e., lacking any specific or defined directionality), or as light having a single or substantially uniform direction. -

Embodiments consistent with the principles described herein may be implemented using a variety of devices and circuits including, but not limited to, one or more of integrated circuits (ICs), very large scale integrated (VLSI) circuits, application specific integrated circuits (ASIC), field programmable gate arrays (FPGAs), digital signal processors (DSPs), graphical processor unit (GPU), and the like, firmware, software (such as a program module or a set of instructions), and a combination of two or more of the above. For example, an embodiment or elements thereof may be implemented as circuit elements within an ASIC or a VLSI circuit. Implementations that employ an ASIC or a VLSI circuit are examples of hardware-based circuit implementations.

In another example, an embodiment may be implemented as software using a computer programming language (e.g., C/C++) that is executed in an operating environment or a software-based modeling environment (e.g., MATLAB^{®}, MathWorks, Inc., Natick, MA) that is further executed by a computer (e.g., stored in memory and executed by a processor or a graphics processor of a general-purpose computer). Note that one or more computer programs or software may constitute a computer-program mechanism, and the programming language may be compiled or interpreted, e.g., configurable or configured (which may be used interchangeably in this discussion), to be executed by a processor or a graphics processor of a computer.

In yet another example, a block, a module or an element of an apparatus, device or system (e.g., image processor, camera, etc.) described herein may be implemented using actual or physical circuitry (e.g., as an IC or an ASIC), while another block, module or element may be implemented in software or firmware. In particular, according to the definitions herein, some embodiments may be implemented using a substantially hardware-based circuit approach or device (e.g., ICs, VLSI, ASIC, FPGA, DSP, firmware, etc.), while other embodiments may also be implemented as software or firmware using a computer processor or a graphics processor to execute the software, or as a combination of software or firmware and hardware-based circuitry, for example.

Further, as used herein, the article 'a' is intended to have its ordinary meaning in the patent arts, namely 'one or more'. For example, 'a lens' means one or more lenses and as such, 'the lens' means 'the lens or lenses' herein. Also, any reference herein to 'top', 'bottom', 'upper', 'lower', 'up', 'down', 'front', back', 'first', 'second', 'left' or 'right' is not intended to

be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the term 'substantially' as used herein means a majority, or almost all, or all, or an amount within a range of about 51% to about 100%. Moreover, examples herein are intended to be illustrative only and are presented for discussion purposes and not by way of limitation.

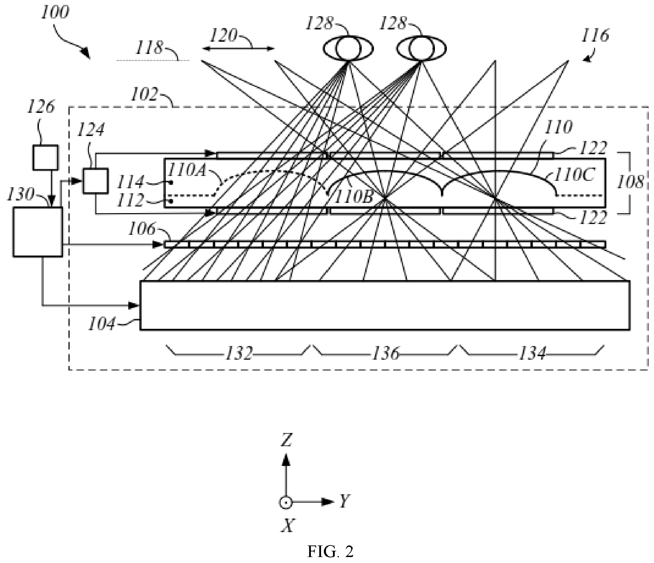

FIG. 2 illustrates a side view of a 2D/multiview switchable lenticular display 100 in an example, according to an embodiment consistent with the principles described herein. The 2D/multiview switchable lenticular display 100 comprises a display panel 102. In some embodiments, the display panel 102 may include a backlight 104 configured to emit light and an array of light valves 106 configured to modulate the light emitted by the backlight 104 to provide the pixels of an image, e.g., a composite image, described below. In other embodiments, other suitable configurations may also be used as the display panel 102, e.g., direct illumination displays such as, but not limited to, an organic liquid crystal diode (OLED) display.

In embodiments that employ a backlight, the backlight 104 may be configured to emit light, such as white light, into a range of propagation angles. In some embodiments, the range of propagation angles may include a continuous range of propagation angles extending across a range of angular spanning an angular viewing range of the display panel 102. The backlight 104 may include a light source, such as one or more light-emitting diodes, which may produce white light or light having a specified spectral profile, according to various embodiments. In some embodiments, the backlight 104 may include a light guide, which may be configured to propagate the light away from the light source. The light guide may direct light out of the light guide over a specified surface area of an emission surface of the light guide.

As illustrated in FIG. 2, the 2D/multiview switchable lenticular display 100 further comprises an array of light valves 106. The array of light valves 106 is configured to modulate light from the backlight 104 to provide an image. In various embodiments, the array of light valves 106 may comprise, but is not limited to, liquid crystal light valves, electrophoretic light valves, light valves based on electrowetting, or other suitable mechanisms for modulating light. In some embodiments, the array of light valves 106 may comprise independently controllable light valves that are arranged on a substrate.

According to various embodiments, the display panel 102 may be configured to provide pixels of a composite image. The composite image may include both multiview image content and two-dimensional (2D) image content, in various embodiments. Combining multiview image content and 2D image content on the same display panel 102 may allow the 2D image content to be presented with a higher resolution than the multiview image content. For example, for an embodiment of the display panel 102 that produces four views of the multiview image content, the resolution of the multiview image content may be a factor of four less than the resolution of the 2D image content. As a specific example, the composite image may include an image of a person and a caption that includes text. In this example, the multiview image content may include the image of the person, such that as a viewer moves in a field of view of the display panel 102, the viewer may observe various different views of the person. In this example, the 2D image content may include the caption with text, which may remain invariant (e.g., with only a single view) as the viewer moves in the field of view of the display panel 102. In the example presented above, the display panel 102 may present the caption with a higher resolution than the image of the person, which may improve readability of the caption text.

The 2D/multiview switchable lenticular display 100 illustrated in FIG. 2 further comprises switchable lenticular lens array 108. The switchable lenticular lens array 108 may be used to form the composite image from the pixels, according to various embodiments. As illustrated, the switchable lenticular lens array 108 may comprise switchable lenticular lenses 110A, 110B, 110C, referred to collectively herein as switchable lenticular lenses 110. The switchable lenticular lenses 110 are switchable between an ON state and an OFF state. In the ON state, the switchable lenticular lenses 110 are configured to provide the multiview image content from corresponding pixels of the composite image. In the OFF state, the switchable lenticular lenses 110 are configured to provide the 2D image content from corresponding pixels of the composite image. For example, in the OFF state, a switchable lenticular lens 110 may effectively become a transparent optical element that lacks or substantially lacks optical power. That is, the switchable lenticular lens 110 in the OFF state pass light without or with only minimal degree of optical effect. In a region or regions of the 2D/multiview switchable lenticular display 100 configured to display 2D image content, the switchable lenticular lenses 110 may be set in the OFF state and therefore may not affect propagation directions of light rays exiting the display panel 102. As such, the pixels of the display panel 102 in these regions may be viewable from a continuous range of view directions, i.e., in or as a 2D image within the region.

Alternatively, when the switchable lenses 110 are set to the ON state, the switchable lenticular lenses 110 have an optical power and are configured to affect the propagation direction of various light rays from the display panel 102 that pass through and exit from the switchable lenticular lenses 110. In particular, in a region or regions of the 2D/multiview switchable lenticular display 100 in which the switchable lenticular lenses 110 are in the ON state, light rays from the display panel 102 exit the switchable lenticular lenses 110 in directions corresponding to various view directions of a multiview image to provide multiview image content in this region or these regions.

According to some embodiments, the switchable lenticular lens array 108 may comprise a first material layer 112 having a fixed refractive index. The first material layer 112 may include fixed lenses of the switchable lenticular lens array 108. The switchable lenticular lens array 108 may include a second material layer 114 having an electrically controllable refractive index. For example, the second material 114 may comprise a birefringent liquid crystal having or exhibiting a first electrically controllable refractive index in a first controllable state and a second electrically controllable refractive index in a second controllable state. The first electrically controllable refractive index of the first controllable state may be configured to match or substantially match the fixed refractive index of the first material layer 112 and the second electrically controllable refractive index of the second controllable state may differ from the fixed refractive index of the first material layer 112, for example. In some embodiments, the second material layer 114 may contact the first material layer 112, such as along a boundary that is shaped with curved portions that may determine where the switchable lenticular lenses 110 are located in the switchable lenticular lens array 108. The second material layer 114 may fill in or substantially fill in shapes of the fixed lenses of the switchable lenticular lens array 108, e.g., as illustrated in FIG. 2. In some embodiments, the first material layer 112 may be disposed between the second material layer 114 and the display panel 102. In these embodiments, a fixed lens of the first material layer 112 may be a positive lens. In other embodiments, the second material layer 114 may be disposed between the first material layer 112 and the display panel 102. In some embodiments, a fixed lens of the first material layer 112 may be a negative lens. In the example of FIG. 2, the first material layer 112 is located between the array of light valves 106 and the second material layer 114, by way of example and not limitation.

In other embodiments (not illustrated), the second material layer 114 may be illustrated between the array of light valves 106 and the first material layer 112. In the example of FIG. 2, a boundary between the first material layer 112 and the second material layer 114 is shaped to have a curved portion corresponding to each switchable lenticular lenses 110 in the switchable lenticular lens array 108. In the example of FIG. 2, the centers of the curved portions are a first distance away from the array of light valves 106, the edges of the curved portions are a second distance away from the array of light valves 106, and the second distance is less than the first distance. Alternatively, the second distance may be greater than the first distance. For all of these configurations, the curvature of the layer boundary and the refractive indices of the first material layer 112 and the second material layer 114 may be selected such that the switchable lenticular lenses 110 have a positive optical power.

In some embodiments, the switchable lenticular lens array 108 may comprise a one-dimensional (1D) array of cylindrical lenses arranged parallel to one another. The lenticular lens may be elongated in a vertical direction (such as along the X-direction in FIG. 2) and may direct light into a plurality of views 116 of the multiview image. The views 116 may be horizontally adjacent to one another (such as having adjacent locations along the Y-direction in FIG. 2). In some embodiments, the cylindrical lens in the ON state may have a focal length selected such that at a specified viewing plane 118, the view 116 may have a center-to-center spacing 120 that corresponds to an average interpupillary distance of a human. In some embodiments, the switchable lenticular lenses in the switchable lenticular lens array 108 may be semi-cylindrical lenses. In some embodiments, the switchable lenticular lenses in the switchable lenticular lens array 108 may be convex cylindrical lenses, concave cylindrical lenses, or lenses of any other suitable shapes.

In other embodiments, the switchable lenticular lens array 108 may comprise a two-dimensional array of lenses. In some embodiments, a switchable lenticular lens 110 in the switchable lenticular lens array 108 may be a rotationally symmetric lens, such as a lens that is symmetric about a longitudinal axis of the lens. In some embodiments, a switchable lenticular lens 110 in the switchable lenticular lens array 108 may be a rotationally asymmetric lens, such as an anamorphic lens. An anamorphic lens may have a first focal length along a first direction (such as along the Y-direction in FIG. 2) and a second focal length along a second direction (such as along the X-direction in FIG. 2) that is orthogonal to the first direction. In some embodiments, the switchable lenticular lenses in the switchable lenticular lens array 108 may be spherical lens elements or aspherical lens elements.

In some configurations, the switchable lenticular lens array 108 may include electrodes 122 configured to deliver at least one of a voltage or a current to switch switchable lenticular lenses 110 of the switchable lenticular lens array 108 independently of the other switchable lenticular lenses 110 of the switchable lenticular lens array 108. For example, the electrodes 122 may be configured to switch every switchable lenticular lens 110 independently of every other switchable lenticular lens. The electrodes 122 may include an upper electrode and a lower electrode configured to apply a voltage or deliver a current across a region of the second material layer 114. The region may correspond to a single switchable lenticular lens 110 or a group of switchable lenticular lenses 110. In some embodiments, the upper electrode or the lower electrode may extend over some or all of the second material layer 114, while the lower electrode or the upper electrode may extend over an area that corresponds to a single switchable lenticular lens. According to various embodiments, the electrodes 122 may be transparent or substantially transparent, e.g., the electrodes 122 may comprise indium tin oxide (ITO) or a similar optically transparent electrode material. In some embodiments, the switchable lenticular lens array 108 may include electrodes 122 configured to switch the switchable lenticular lenses 110 in a region of the switchable lenticular lens array 108 corresponding to a zone of the composite image independent of switchable lenticular lenses 110 in regions of the switchable lenticular lens array 108 corresponding to other zones of the composite image. For embodiments, the electrodes 122 may be configured to switch a group of switchable lenticular lenses 110, together, independently of other switchable lenticular lenses 110 in the switchable lenticular lens array 108. The electrodes 122 may include an upper electrode and a lower electrode configured to apply a voltage or deliver a current across a region of the second material layer 114. The region may correspond to a group of switchable lenticular lenses 110. In some embodiments, one of the electrodes 122 may extend over some or all of the second material layer 114, while an opposing electrode 122 may extend over an area that corresponds to multiple switchable lenticular lenses 110, such as in a specified zone of the composite image.

In some embodiments (e.g., as illustrated in FIG. 2), the 2D/multiview switchable lenticular display 100 further comprises a lens controller 124. The lens controller 124 may be configured to control the electrically controlled refractive index of the second material layer to have a refractive index that differs from the fixed refractive index to provide the ON state. The lens controller 124 may further control the electrically controlled refractive index of the second material layer 114 to have a refractive index that matches the fixed refractive index to provide the OFF state. For example, the lens controller 124 may selectively supply at least one of a voltage or a current to particular electrode pairs of the electrodes 122 which, in turn, are configured to distribute the at least one of the voltage or the current over suitable area(s) of the switchable lenticular lens array 108. For zonal switching, the lens controller 124 may switch the switchable lenticular lenses 110 of a zone of the composite image, together, between the ON state to provide the multiview image and the OFF state to provide the 2D image. In the example of FIG. 2, the lens controller 124 is part of the display panel 102. In other embodiments, the lens controller 124 may not be part of the display panel 102.

In some embodiments, the 2D/multiview switchable lenticular display 100 may further comprise a controller 130. In various embodiments, the controller 130 may be configured to provide a video image signal or a static image signal to the light valve array 106. The video image signal or a static image signal may include data that corresponds to a video image or a static image that may be displayed on the 2D/multiview switchable lenticular display 100. The controller 130 may be connected by a wireless or wired connection to receive the video image signal or the static image signal from a server or network. In some embodiments, the controller 130 may be configured to provide a separate video image signal or a separate static image signal for each view direction of the 2D/multiview switchable lenticular display 100. In some embodiments, the controller 130 may further control the lens controller 124 or the light source in the backlight 104. An optional eye tracker 126 may determine positions of eyes 128 of the user and may provide data representing the eye positions to the controller 130. In the example of FIG. 2, the controller 130 is not part of the display panel 102; in other configurations, the controller 130 may be part of the display panel 102.

According to various embodiments, the display panel 102 of the 2D/multiview switchable lenticular display 100 may be configured to provide the pixels of the composite image through temporal mixing or zonal mixing of pixels representing the multiview image content and the 2D image content within the composite image.

Temporal mixing may comprise time-multiplexing of the ON and OFF states of the switchable lenticular lenses 110 of the switchable lenticular lens array 108 to time-multiplex the multiview image content and 2D image content within the composite image. For example, for a particular region of the composite image, the display panel 102 may alternate in time between displaying multiview image content (and setting the switchable lenticular lens 110 to the ON state) and displaying 2D image content (and setting the switchable lenticular lens 110 to the OFF state). The alternating in time may occur every video frame, or at another suitable time-multiplexing rate. For time-multiplexing rates that are higher than a response rate of a human eye, the temporal mixing may be perceived as a 2D image superimposed on a multiview image. As a viewer moves in the field of view of the display panel 102, the multiview image may change from view to view, while the 2D image remains invariant. By way of example, the array of light valves 106 may be an LCD panel operating at 120 Hz, and the lens controller 124 may be configured to switch the switchable lenticular lens 110 between the ON state and the OFF state at 60 Hz, to provide time-multiplexing. In another example, the LCD panel or light valve array may operate at 240 Hz and the lens controller 124 may be configured to switch the switchable lenticular lens 110 between the ON state and the OFF state at 120 Hz.

Zonal mixing may comprise switching different subsets of the switchable lenticular lenses 110 in different regions of the switchable lenticular lens array corresponding to different zones of the composite image to the ON state to provide the multiview image content and to the OFF state to provide the 2D image content. For example, a first region of the display panel 102 may be configured to provide the multiview image content, and a second region of the display panel 102 may be configured to provide the 2D image content. In some embodiments, the multiview image content and the 2D image content may be provided simultaneously. As a viewer moves in the field of view of the display panel 102, the multiview image may change from view to view in the first region, while the 2D image remains invariant in the second region.

In an example of zonal mixing, the pixels of the composite image may be grouped into mutually exclusive subsets of pixels. Each subset of pixels may correspond to a respective switchable lenticular lens 110 of the switchable lenticular lens array 108. A switchable lenticular lens 110 of the switchable lenticular lens array 108 is configured to direct light from the corresponding subset of pixels into respective view directions of the multiview image as a view pixel of different views of the multiview image when the switchable lenticular lens 110 is in the ON state.

In the example of FIG. 2, the switchable lenticular lens array 108 includes three switchable lenticular lenses 110A, 110B, 110C. Each switchable lenticular lens 110A, 110B, 110C is associated with six light valves 106 of the array of light valves 106. The leftmost switchable lenticular lens 110A is associated with the leftmost grouping 132 of light valves. The rightmost switchable lenticular lens 110C is associated with the rightmost grouping 134 of light valves. The center switchable lenticular lens 110B is associated with the central group 136 of light valves. Each of the three groups of light valves corresponds to a respective zone of the composite image. FIG. 2 shows the leftmost switchable lenticular lens as being in the OFF state (as indicated by the dashed line), and the center and rightmost switchable lenticular lens in the ON state. As a result, the leftmost zone of the composite image is presented in 2D, while the center and rightmost zones of the composite image appear in multiview.

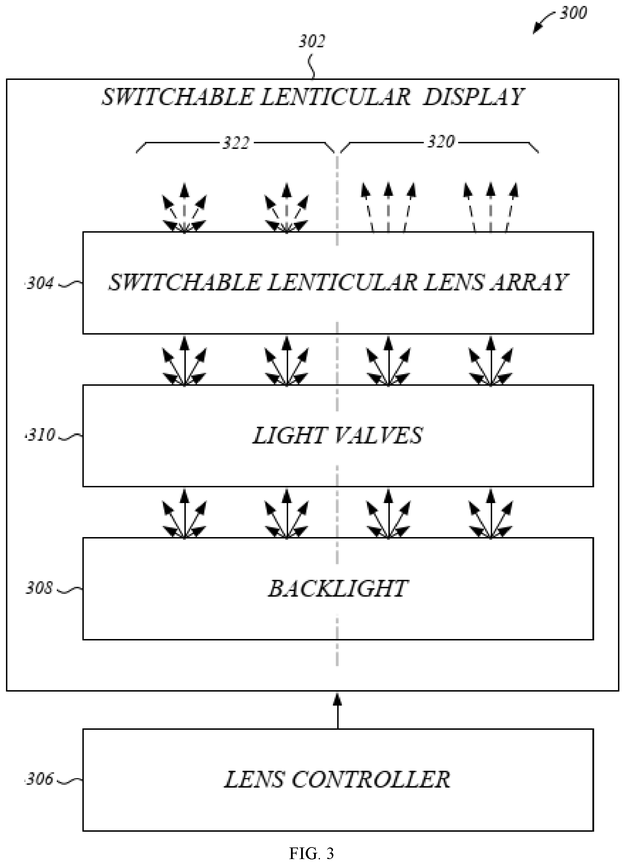

FIG. 3 illustrates a block diagram of a 2D/multiview switchable lenticular system 300 in an example, according to an embodiment consistent with the principles described herein. As illustrated, the 2D/multiview switchable lenticular system 300 comprises a switchable lenticular lens display 302 configured to provide a composite image comprising both multiview image content and two-dimensional (2D) image content. The switchable lenticular lens display 302 may include a switchable lenticular lens array 304 having switchable lenticular lenses that are switchable between an ON state and an OFF state. In some embodiments, the switchable lenticular lens array 304 may be substantially similar to the switchable lenticular lens array 108, described above.

The 2D/multiview switchable lenticular system 300 illustrated in FIG. 3 further comprises a lens controller 306. The lens controller 306 is configured to provide the composite image using either temporal mixing or zonal mixing of the multiview image content and 2D image content. Temporal mixing may include time-multiplexing an ON state and an OFF state of the switchable lenticular lenses of the switchable lenticular lens array 304 to superimpose the multiview image content and 2D image content within the composite image. The time-multiplexing may include a duty cycle that may optionally be controlled or varied to control or vary relative intensities of the multiview image content and 2D image content within the composite image. Zonal mixing may include selectively switching ON switchable lenticular lenses in a first zone 320 of the composite image to provide the multiview image content in the first zone 320 and selectively switching OFF switchable lenticular lens in a second zone 322 of the composite image to provide 2D image content in the second zone 322. In some embodiments, the lens controller 306 may be substantially similar to the lens controller 124, described above.

In some embodiments, the switchable lenticular lens array 304 may include a first material layer having a fixed refractive index. The first material layer may include fixed lenses of the switchable lenticular lens array 304. In some embodiments, the first material layer of the switchable lenticular lens array 304 may be substantially similar to the first material layer 112, described above.

The switchable lenticular lens array 304 may include a second material layer having an electrically controlled refractive index. The second material layer of the switchable lenticular lens array 304 may be in contact with the first material layer and fill in or substantially fill in shapes of the fixed lenses of the switchable lenticular lens array 304. The electrically controlled refractive index may have a first controllable state that matches the fixed refractive index of the first material layer and a second controllable state that differs from the fixed refractive index. In some embodiments, the second material layer of the switchable lenticular lens array 304 may be substantially similar to the second material layer 114, described above.

In some embodiments, the switchable lenticular lens array 304 may include electrodes configured to selectively deliver a current or a voltage to switch switchable lenticular lenses of the switchable lenticular lens array 304 independently of the other switchable lenticular lenses of the switchable lenticular lens array. In some embodiments, the electrodes may be substantially similar to the electrodes 122, described above.

In some embodiments, the switchable lenticular lens array 304 may include electrodes configured to selectively deliver a current or a voltage to switch the switchable lenticular lenses in a region of the switchable lenticular lens array 304 corresponding to a zone of the composite image independently of switchable lenticular lenses in regions of the switchable lenticular lens array 304 corresponding to other zones of the composite image. In some embodiments, the electrodes of the switchable lenticular lens array 304 may be substantially similar to the electrodes 122, described above.

In some embodiments, a switchable lenticular lens in the switchable lenticular lens array 304 may be a cylindrical lens. The cylindrical lens may be elongated in a vertical direction and is configured to direct light in directions corresponding to a plurality of views of the multiview image. The views may be horizontally adjacent to one another. In some embodiments, the cylindrical lens in the ON state may have a focal length selected such that at a specified viewing plane, the views may have a center-to-center spacing that corresponds to an average interpupillary distance of a human. In some embodiments (e.g., as illustrated in FIG. 3), the 2D/multiview switchable lenticular system 300 may optionally comprise a backlight 308 that is substantially similar to the backlight 104, described above. In some embodiments (e.g., as illustrated in FIG. 3), the 2D/multiview switchable lenticular system 300 may optionally include an array of light valves 310 that is substantially similar to the array of light valves 106, described above.

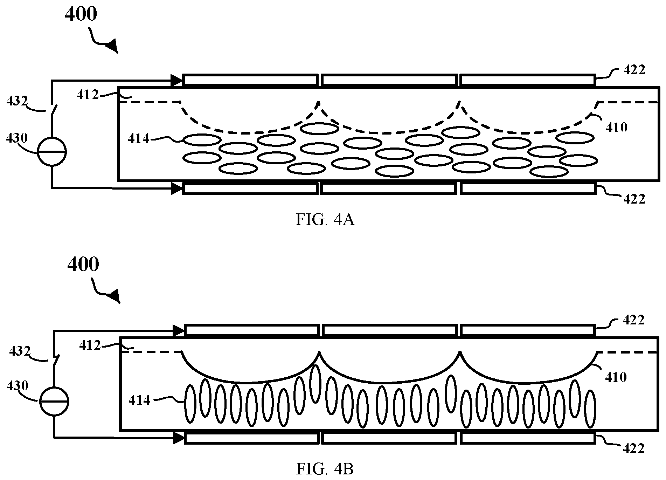

FIGS. 4A and 4B illustrate schematic diagrams of a switchable lenticular lens array 400 in an OFF state and in an ON state, respectively, in an example, according to an embodiment consistent with the principles described herein. As illustrated, the switchable lenticular lens array 400 comprises switchable lenticular lenses 410 that are switchable between the ON state and the OFF state (as indicated by the dashed line). In some embodiments, the switchable lenticular lens array 400 may be substantially similar to the switchable lenticular lens array 108, described above.

The switchable lenticular lens array 400 illustrated in FIGS. 4A and 4B further comprises a first material layer 412 having a fixed refractive index. The first material layer 412 may include fixed lenses of the switchable lenticular lens array 400. In some embodiments, the first material layer 412 of the switchable lenticular lens array 400 may be substantially similar to the first material layer 112, described above. The switchable lenticular lens array 400 may include a second material layer 414 having an electrically controlled refractive index. The second material layer 414 of the switchable lenticular lens array 400 may be in contact with the first material layer and fill in or substantially fill in shapes of the fixed lenses of the switchable lenticular lens array 400. The electrically controlled refractive index may have a first controllable state that matches the fixed refractive index of the first material layer 412 and a second controllable state that differs from the fixed refractive index. In some embodiments, the second material layer 414 of the switchable lenticular lens array 400 may be substantially similar to the second material layer 114, described above.

The switchable lenticular lens array 400 illustrated in FIGS. 4A and 4B further includes electrodes 422 configured to selectively deliver a current or a voltage to switch the switchable lenticular lenses 410 of the switchable lenticular lens array 400. In some embodiments, the electrodes 422 may be substantially similar to the electrodes 122, described above.

In the embodiment illustrated in FIGS. 4A and 4B, the switchable lenticular lens array 400 further includes a switch 432 and a power supply 430. In other embodiments, the switch 432 and the power supply 430 may not be included in the switchable lenticular lens array 400. In some embodiments, as shown in FIG. 4A, when the switch 432 is open, the current and voltage of the power supply 430 are not supplied to the electrodes 422, no electric field is applied to the second material layer 414, and the switchable lenticular lens array 400 is in the OFF state. In the OFF state, the long axis of material crystal of the second material layer 414 extends in a horizontal direction or a substantially horizontal direction such that the refractive index of the second material layer 414 matches the fixed refractive index of the first material layer 412, and thus the switchable lenticular lenses 410 pass light without or with only minimal degree of optical effect.

In some embodiments, as shown in FIG. 4B, when the switch 432 is closed, a current or a voltage from the power supply 430 is provided to the electrode 422, generating a vertically oriented electric field to apply to the second material layer 414, and the switchable lenticular lens array 400 is in the ON state. In the ON state, the long axis of material crystal of the second material layer 414 extends in a direction different from the horizontal direction such that the refractive index of the second material layer 414 is different from the fixed refractive index of the first material layer 412, and thus the switchable lenticular lenses 410 may affect the propagation direction of various light rays from the display panel that pass through and exit from the switchable lenticular lenses 410. By way of example only and not limitation, the long axes of the material crystals of the second material layer 414 in FIG. 4B all extend in a vertical direction to indicate that the crystals have a refractive index different from the fixed refractive index. It should be appreciated by those skilled in the art, the long axis directions of the material crystals of the second material layer 414 being different from the horizontal direction may indicate that the refractive index of the second material layer 414 differs from the fixed refractive index of the first material layer 412, and the long axis directions of the crystals of the second material layer 414 in the respective zoness may be adjusted to different directions according to various view directions so that the second material layer 414 has different refractive indices in the respective zones.

According to other embodiments of the principles described herein, a method of operating a 2D/multiview switchable lenticular display is provided. In particular, the method of operating a 2D/multiview switchable lenticular display may have at least two modes, i.e., a 2D mode and a multiview mode, which are time-multiplexed or time-interlaced. The 2D mode may display two-dimensional (2D) image content, while the multiview mode may display three-dimensional (3D) or multiview image content, according to various embodiments. Time-multiplexing combines the 2D image content with the 3D or multiview image content as a composite image having both 2D image and multiview image content or information.

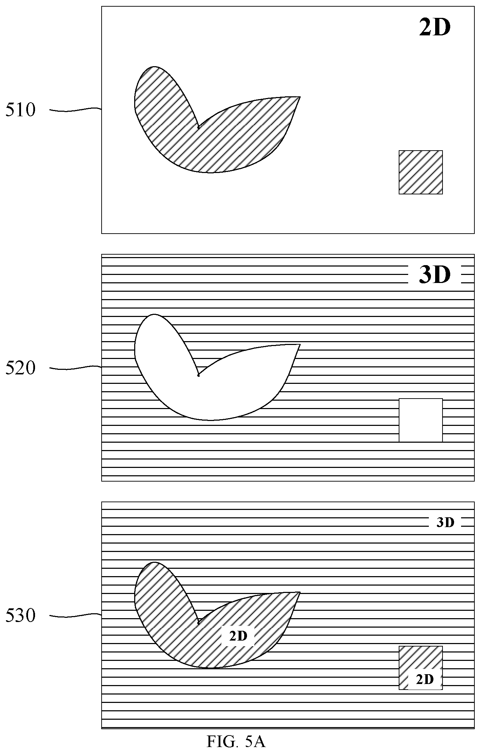

FIG. 5A illustrates a composite image perceived by a user in an example, according to an embodiment consistent with the principles described herein. According to some embodiments, as illustrated in FIG. 5A, the time-multiplexed display displays a 2D image 510 (indicated by diagonal shading) during a 2D mode and a 3D or multiview image 520 (indicated by horizontal shading) during a multiview mode. As described above, the 2D image 510 and the 3D or multiview image 520 are superimposed on the time-multiplexed display by time-multiplexing the 2D mode and the multiview mode to provide the composite image 530.

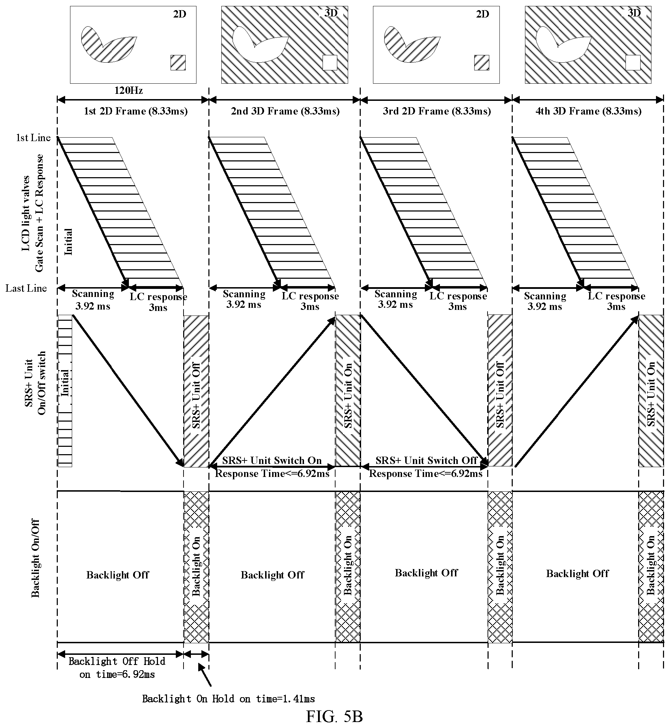

FIG. 5B illustrates a schematic diagram of an example 2D/multiview switchable lenticular display switching between a 2D mode and a multiview mode, according to an embodiment consistent with the principles described herein. In the example of FIG. 5B, the array of light valves is an LCD panel operating at 120 Hz and the switchable lenticular lenses of the switchable lenticular lens array (e.g., an SRS+ unit) are switched between an ON state and an OFF state at 60 Hz to provide time-multiplexing. As illustrated in the top row of FIG. 5B, the first and third frames are expected to display 2D contents and the second and fourth frames are expected to display 3D or multiview contents, and so on. During the updating of image, the array of light valves (e.g., liquid crystal light valves) is gate scanned line-by-line according to the content to be displayed, to refresh the array of light valves corresponding to a full screen. After receiving a gate scanning signal, the liquid crystal in the light valve requires a response time to accomplish the corresponding switching, i.e., liquid crystal pixels will delay showing the correct content. In some cases, the total time for all rows of the array of light valves (i.e., the full screen) to accomplish the gate scanning and liquid crystal response is beyond a frame period of one frame. In each frame period, the backlight is lit only after switching of the liquid crystals in the light valve is accomplished and state switching of the switchable lenticular lens array is accomplished to display the correct 2D image content or multiview image content. The holding time for the backlight being lit needs to meet the minimum brightness requirements of the display. As such, if the total time for completing gate scanning of all rows of the array of light valvesand liquid crystal response is too long, it may result in only a fraction of the area of the entire display being updated to display within the limited frame period, such that a partial content of the previous frame is overlapped with a updated partial content of the current frame, thereby affecting hybrid performance.

As shown in FIG. 5B, in order to display correct image content, the following formula (1) applies among a gate scanning time T_{LCD_SCAN} of the array of light valves, a liquid crystal response time T_{LCD_RESP} of the array of light valves, a lighting time T_{BLU} of the backlight and the frame period T of one frame: $T \geq {T}_{LCD_SCAN} + {T}_{LCD_RESP} + {T}_{BLU}$

As shown in FIG. 5B, the equation (1) applies to both a 2D frame and a 3D frame. As illustrated by way of example rather than limitation in FIG. 5B, the refresh frequency of the array of light valves (and thus the LCD panel) may be to remain at 120 Hz, and the SRS+ unit is switched between the ON and OFF states at 60 Hz. Those skilled in the art will appreciate that although FIG. 5B illustrates, in a non-limiting manner, an embodiment where the array of light valves is refreshed at 120 Hz and the SRS+ unit is switched between the ON and OFF states at 60 Hz, in other embodiments, the array of light valves may have other refresh frequencies and the SRS+ unit may switch between the ON and OFF states at half of the refresh frequency. In some examples, the array of light valves may operate at 180 Hz and the SRS+ unit may be switched between the ON state and the OFF state at 90 Hz.

In some embodiments, the driving rate of the array of light valves may be remained (i.e., the gate scanning time T_{LCD_SCAN} is unchanged) while the refresh frequency of the array of light valves is reduced such that the frame period T is extended so as to satisfy the equation (1). It should be noted that, as described above, the refresh frequency of the array of light valves needs to at least exceed the visual persistence of a viewer using the display, such that each of the 2D image content and the multiview image content will appear to the user as being constantly present and without perceivable flicker in the composite image. For each of the 2D mode and the multiview mode, a switching rate of at least about 60 Hz (i.e., a refresh frequency of about 120 Hz) would provide this visual persistence goal (i.e., about or less than 1 millisecond in each mode).

In the embodiment illustrated in FIG. 5B, by adjusting the gate scanning time T_{LCD_SCAN}, the liquid crystal response time T_{LCD_RESP} and the minimum lighting time required for the backlight of the array of light valves, such that the sum of them is less than or equal to one frame period T, so that the respective contents are displayed correctly in the full screen at each frame (i.e., the backlight is activated when the 2D image content is fully refreshed on the array of light valves and the backlight is activated when the multiview image content is fully refreshed on the array of light valves), and the lighting time T_{BLU} of the backlight is greater than its minimum lighting time required for them.

On the other hand, in order to display 2D image content and multiview image content correctly, the switchable lenticular lens array is also required a certain response time for the switchable lenticular lenses to switch from an ON state to an OFF state or from the OFF state to the ON state. If the switching response time of the switchable lenticular lens array is too long such that state switching of the switchable lenticular lens array is still not accomplished when the backlight is lit, the switchable lenticular lens array cannot correctly direct light from the array of light valves and thus cannot display the correct image content on the switchable lenticular display.

As shown in FIG. 5B, in order to display the correct image content, the following equation (2) applies to the maximum switching response time T_{SRS_MAX} of the switchable lenticular lens array, the lighting time T_{BLU} of the backlight and the frame period T of one frame: $T \geq {T}_{SRS_MAX} + {T}_{BLU}$

As shown in FIG. 5B, equation (2) applies to both a 2D frame and a 3D frame, i.e., the maximum switching response time T_{SRS_MAX} represents the largest one of the response time for switching the switchable lenticular lenses from the ON state to the OFF state and the response time for switching the switchable lenticular lenses from the OFF state to the ON state.

In some embodiments, the switching response time for switching the switchable lenticular lenses from the OFF state to the ON state can be shortened by employing overdriving technique that rapidly switches the LC, such as delivering a voltage or a current to the electrodes of the switchable lenticular lens array to generate a vertically oriented electric field applied to the second material layer as illustrated in FIG. 4B, in order to satisfy the equation (2).

In some embodiments, in order to display the correct image content, the backlight is activated or lit when refreshing of the array of light valves is accomplished and state switching of the switchable lenticular lens array is accomplished, i.e., the equations (1) and (2) are satisfied at the same time.

In some embodiments, as shown in FIG. 5B, the backlight is a strobing backlight or a scanning backlight operating in a strobing mode, i.e., the backlight is turned on and off in its entirety, with the entire area of the backlight being lit simultaneously to emit light to the entire array of light valves during illumination of the backlight. In the embodiment of FIG. 5B, all rows of the SRS+ unit or the switchable lenticular lens array may be switched from the OFF state to the ON state or from the ON state to the OFF state at the same time after the end of one frame, and the entire backlight may be activated or lit only when refreshing of all rows of the array of light valves is accomplished and state switching of all rows of the SRS+ unit or the switchable lenticular lens array is accomplished.

In some embodiments, the state switching of all rows of the switchable lenticular lens array can be accomplished before the refreshing of all rows of the array of light valves is accomplished, and the entire backlight can be lit when the refreshing of all rows of the array of light valves is accomplished. In other words, the maximum switching response time T_{SRS_MAX} of the switchable lenticular lens array is less than or equal to the sum of the gate scanning time T_{LCD_SCAN} and the liquid crystal response time T_{LCD_RESP} of the array of light valves. In other embodiments, the refreshing of all rows of the array of light valves can be accomplished before the state switching of all rows of the switchable lenticular lens array is accomplished, and the entire backlight can be lit when the state switching of all rows of the switchable lenticular lens array is accomplished.

In some embodiments, the time for switching all rows of the switchable lenticular lens array from the ON state to the OFF state may be different from the time for switching from the OFF state to the ON state. Thus, in some embodiments, the entire backlight can be lit upon completion of state switching for all rows of the switchable lenticular lens array when equations (1) and (2) are satisfied, such that the lighting time of the backlight to display 2D image content is different from the lighting time of the backlight to display multiview image content. In other embodiments, although the time for switching all rows of the switchable lenticular lens array from the ON state to the OFF state is different from the time for switching all rows of the switchable lenticular lens array from the OFF state to the ON state, the illumination of the backlight may still be selected such that the lighting time of the backlight to display the 2D image content being the same as the lighting time of the backlight to display the multiview image content. In the embodiment illustrated in FIG. 5B, the term 'switchable lenticular lens array' may be used interchangeably with 'SRS+ unit'. Although the requirements of the switching response time for switching the switchable lenticular lens array between the ON state and the OFF state is explained above with the embodiment of FIG. 5B, such requirements are also applicable to other related embodiments.

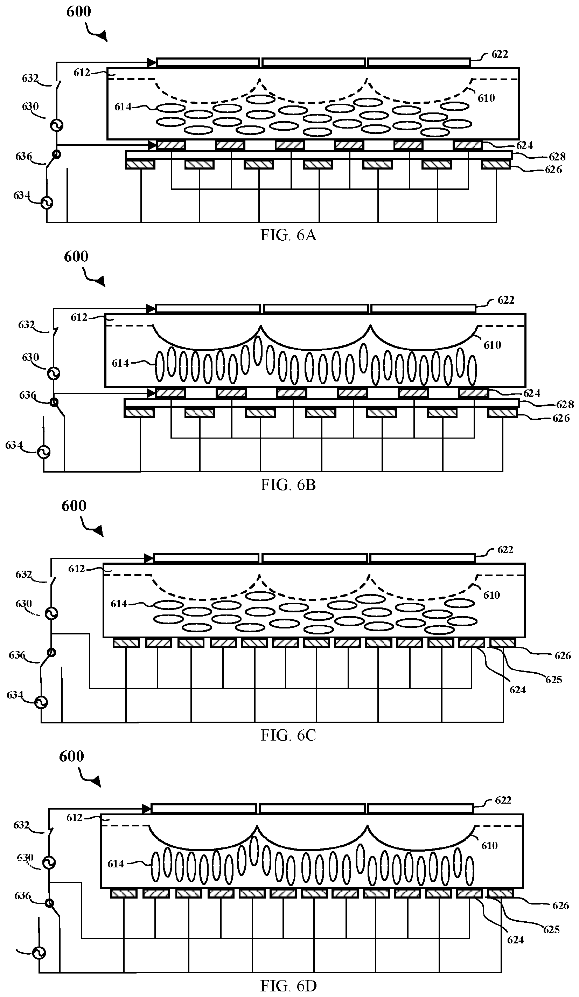

In order to shorten the switching response time for switching the switchable lenticular lens from the ON state to the OFF state, the present disclosure proposes a new structure of the switchable lenticular lens array. FIGS. 6A and 6B illustrate cross sectional views of a switchable lenticular lens array 600 in an OFF state and in an ON state, respectively, in an example, according to another embodiment consistent with the principles described herein. Similar to the switchable lenticular lens array 400 illustrated in FIGS. 4A and 4B, the switchable lenticular lens array 600 illustrated in FIGS. 6A and 6B comprises switchable lenticular lenses 610 that are switchable between the ON state and the OFF state (as indicated by the dashed line), a first material layer 612 having a fixed refractive index, and a second material layer 614 having an electrically controlled refractive index. On the contrary to the switchable lenticular lens array 400 illustrated in FIGS. 4A and 4B, the switchable lenticular lens array 600 illustrated in FIGS. 6A and 6B comprises an upper electrode 622 and lower electrodes 624, 626, where the lower electrodes 624, 626 comprise two layers of electrodes, the first layer of electrodes 624 and the second layer of electrodes 626 each including strip electrodes that are spaced apart from one another, the strip electrodes of the first layer of electrodes 624 being shorted to each other, the strip electrodes of the second layer of electrodes 626 being shorted to each other, the strip electrodes of the first layer of electrodes 624 and the strip electrodes of the second layer of electrodes 626 being interleaved with each other. In other embodiments, the electrodes in the first layer of electrodes 624 and the second layer of electrodes 626 may be electrodes of other shapes that are interleaved with one another. In the embodiment of FIGS. 6A and 6B, an insulating layer 628 is disposed between the first layer of electrodes 624 and the second layer of electrodes 626.

The switchable lenticular lens array 600 illustrated in FIGS. 6A and 6B further comprises a first power supply 630, a first switch 632, a second power supply 634 and a second switch 636, where the first switch 632 controls the loop of the first power supply 630 and the second switch 636 controls the loop of the second power supply 634, and the second switch 636 is a dual-contact switch. In other embodiments, the first power supply 630, the first switch 632, the second power supply 634 and the second switch 636 may not be included in the switchable lenticular lens array 600. In some embodiments, as shown in FIG. 6A, upon switching the switchable lenticular lens array 600 to the OFF state, the first switch 632 is opened and the second switch 636 is switched to a contact connected to the second power supply 634, the voltage and current of the first power supply 630 is not supplied between the upper electrode 622 and the lower electrodes 624, 626, and the voltage or current of the second power supply 634 is supplied between the first layer of electrodes 624 and the second layer of electrodes 626. Thus, a horizontal electric field is formed between the strip electrodes of the first layer of electrodes 624 and the strip electrodes of the second layer of electrodes 626 and forces the extension direction of the long axis of the material crystals in the second material layer 614 to turn to a horizontal direction, such that the refractive index of the second material layer 614 matches the fixed refractive index of the first material layer 612 to provide the OFF state. In some embodiments, as shown in FIG. 6B, upon switching the switchable lenticular lens array 600 to the ON state, the first switch 632 is closed and the second switch 636 is switched to another contact, the voltage and current of the second power supply 634 is not supplied between the first layer of electrodes 624 and the second layer of electrodes 626, the first layer of electrodes 624 and the second layer of electrodes 626 are shorted, the voltage or current of the first power supply 630 is supplied between the upper electrode 622 and the lower electrode (the first layer of electrodes 624 and the second layer of electrodes 626). Thus, a vertical electric field is formed between the upper electrode 622 and the lower electrodes 624, 626 and forces the extension direction of the long axis of the material crystals in the second material layer 614 to turn to the vertical direction, such that the refractive index of the second material layer 614 is different from the fixed refractive index of the first material layer 612 to provide the ON state. By way of example only and not limitation, the long axes of the material crystals of the second material layer 414 in FIG. 6B all extend in a vertical direction to indicate that the crystals have a refractive index different from the fixed refractive index. It should be understood by those skilled in the art that the long axis directions of the material crystals of the second material layer 614 being different from the horizontal direction may indicate that the refractive index of the second material layer 414 differs from the fixed refractive index of the first material layer 612, and the long axis directions of the crystals of the second material layer 614 in the respective zones may be adjusted to different directions according to various view directions so that the second material layer 614 has different refractive indices in the respective zones.

In other examples (not shown), the switchable lenticular lens array comprises an upper electrode and a lower electrode, where the upper electrode includes two layers of electrodes with an insulating layer disposed therebetween, the first layer of electrodes and the second layer of electrodes each includes strip electrodes that are spaced apart from one another, the strip electrodes of the first layer of electrodes are shorted to each other, the strip electrodes of the second layer of electrodes are shorted to each other, the strip electrodes of the first layer of electrodes and the strip electrodes of the second layer of electrodes are interleaved with each other. In some embodiments, the voltage of the first power supply is applied between the lower electrode and the first and second layers of electrodes of the upper electrode, generating an electric field in a vertical direction; a voltage of a second power supply is applied between the first layer of electrodes and the second layer of electrodes of the upper electrode, and an electric field in a horizontal direction is generated.

In other examples (not shown), the switchable lenticular lens array comprises an upper electrode and a lower electrode, where both the upper electrode and the lower electrode include two layers of electrodes with an insulating layer disposed therebetween, the first layer of electrodes and the second layer of electrodes each includes strip electrodes spaced apart from one another, the strip electrodes of the first layer of electrodes are interleaved with the strip electrodes of the second layer of electrodes, the strip electrodes of the first layer of electrodes of the upper electrodes are shorted to each other, the strip electrodes of the second layer of electrodes of the upper electrodes are shorted to each other, and the strip electrodes of the first layer of electrodes of the lower electrodes are shorted to each other, the strip electrodes of the second layer of electrodes of the lower electrodes are shorted to each other. In some embodiments, the voltage of the first power supply is applied between the first and second layers of electrodes of the upper electrode and the first and second layers of electrodes of the lower electrode, generating an electric field in a vertical direction; a voltage of the second power supply is applied between the first layer of electrodes and the second layer of electrodes of the upper electrode and/or between the first layer of electrodes and the second layer of electrodes of the lower electrode, and an electric field in a horizontal direction is generated.

In other examples (not shown), one of the two layers of electrodes provided with an insulating layer may cover the entire area of the switchable lenticular lens array and the other of the two layers of electrodes may comprise strip electrodes spaced apart from one another. In some embodiments (not shown), one of the two layers of electrodes that covers the entire area of the switchable lenticular lens array may comprise a hollow pattern. In some embodiments, the shape of the two layers of electrodes may be optimized as desired, the two layers of electrodes may be provided in any suitable shape that may produce the desired horizontal electric field.

FIGS. 6C and 6D illustrate cross-sectional views of the switchable lenticular lens array 600 in an OFF state and in an ON state, respectively, in another example, according to another embodiment consistent with the principles described herein. The switchable lenticular lens array 600 illustrated in FIGS. 6C and 6D is substantially similar to the switchable lenticular lens array 600 illustrated in FIGS. 6A and 6B except that the lower electrodes 624, 626 of the switchable lenticular lens array 600 illustrated in FIGS. 6C and 6D include a first set of lower electrodes 624 and a second set of lower electrodes 626 arranged in the same layer, the first set of lower electrodes 624 and the second set of lower electrodes 626 each including strip electrodes that are spaced apart from one another, the strip electrodes of the first set of lower electrodes 624 being shorted to each other, the strip electrodes of the second set of lower electrodes 626 being shorted to each other, and the strip electrodes of the first set of lower electrodes 624 and the strip electrodes of the second set of lower electrodes 626 arranged to be interlaced with each other, i.e., interleaved with each other. In other embodiments, the electrodes in the first set of lower electrodes 624 and the second set of lower electrodes 626 may be electrodes of other shapes interleaved with each other. In the embodiment of FIGS. 6C and 6D, a gap 625 is provided between the first set of lower electrodes 624 and the second set of lower electrodes 626. In some embodiments, the gap 625 may be between 0.1 µm and 100 µm, and in other embodiments, the gap 625 may be other suitable values.

In some embodiments, as shown in FIG. 6C and similar to FIG. 6A, upon switching the switchable lenticular lens array 600 to the OFF state, the first switch 632 is opened and the second switch 636 is switched to a contact connected to the second power supply 634, the voltage and current of the first power supply 630 is not supplied between the upper electrode 622 and the lower electrodes 624, 626, and the voltage or current of the second power supply 634 is supplied between the first set of lower electrodes 624 and the second set of lower electrodes 626. Thus, a horizontal electric field is formed between the strip electrodes of the first set of lower electrodes 624 and the strip electrodes of the second set of lower electrodes 626 and forces the extension direction of the long axis of the material crystals in the second material layer 614 to turn to a horizontal direction, such that the refractive index of the second material layer 614 matches the fixed refractive index of the first material layer 612 to provide the OFF state. In some embodiments, as shown in FIG. 6D and similar to FIG. 6B, upon switching the switchable lenticular lens array 600 to the ON state, the first switch 632 is closed and the second switch 636 is switched to another contact, the voltage and current of the second power supply 634 is not provided between the first set of lower electrodes 624 and the second set of lower electrodes 626, the first set of lower electrodes 624 and the second set of lower electrodes 626 are shorted, and the voltage or current of the first power supply 630 is provided between the upper electrode 622 and the lower electrode (the first set of lower electrodes 624 and the second set of lower electrodes 626). Thus, a vertical electric field is formed between the upper electrode 622 and the lower electrodes 624, 626 and forces the extension direction of the long axis of the material crystals in the second material layer 614 to turn to the vertical direction, such that the refractive index of the second material layer 614 is different from the fixed refractive index of the first material layer 612 to provide the ON state.

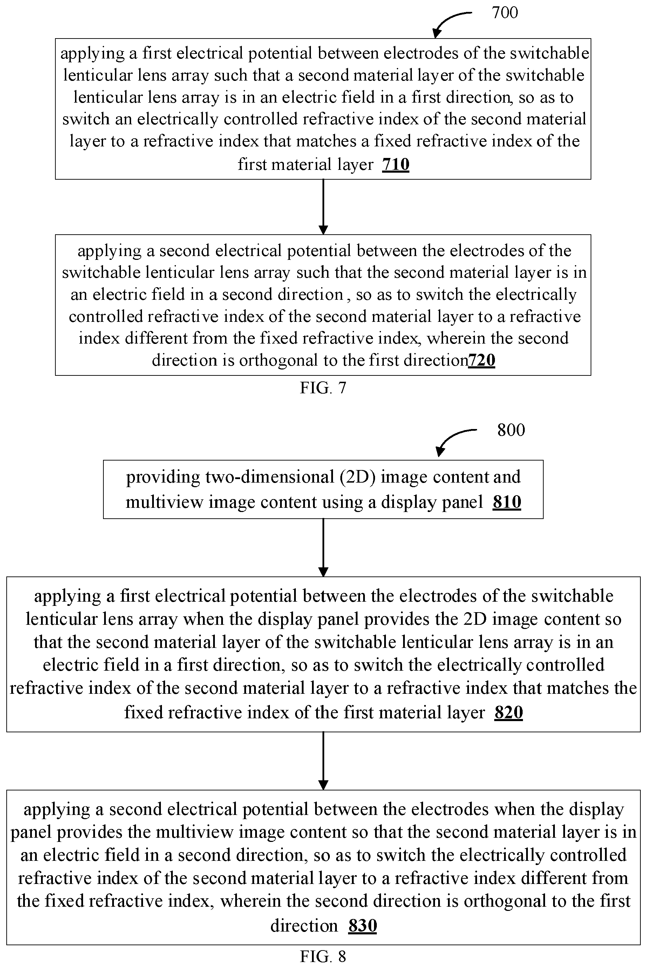

FIG. 7 illustrates a flowchart of a method 700 of operating a switchable lenticular lens array in an example, according to an embodiment consistent with the principles described herein. As illustrated in FIG. 7, the method 700 of operating a switchable lenticular lens array comprises applying a first electrical potential between electrodes of the switchable lenticular lens array such that a second material layer of the switchable lenticular lens array is in an electric field in a first direction (e.g., a horizontal direction), so as to switch an electrically controlled refractive index of the second material layer to a refractive index that matches a fixed refractive index of the first material layer 710. In some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D. In some embodiments, the first electrical potential may be substantially similar to the voltage provided by the second power supply 634 described above with reference to FIGS. 6A-6D.

The method 700 of operating the switchable lenticular lens array shown in Fig. 7 further comprises applying a second electrical potential between the electrodes of the switchable lenticular lens array such that the second material layer is in an electric field in a second direction (e.g., a vertical direction), so as to switch the electrically controlled refractive index of the second material layer to a refractive index different from the fixed refractive index, wherein the second direction is orthogonal to the first direction 720. In some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D. In some embodiments, the second electrical potential may be substantially similar to the voltage provided by the power supply 430 described above with reference to FIGS. 4A-4B and the voltage provided by the first power supply 630 described above with reference to FIGS. 6A-6D.

In some embodiments, the switchable lenticular lens array comprises: a first material layer having a fixed refractive index and comprising fixed lenses of the switchable lenticular lens array; a second material layer having an electrically controlled refractive index, the second material layer contacting the first material layer and filling in the shapes of the fixed lenses of the switchable lenticular lens array; and electrodes comprising an upper electrode and a lower electrode, the first material layer and the second material layer being disposed between the upper electrode and the lower electrode; wherein switching a switchable lenticular lens of the switchable lenticular lens array to the ON state comprises applying a first electrical potential between the electrodes to make the second material layer in an electric field in a first direction, so as to control the electrically controlled refractive index of the second material layer to have a refractive index different from the fixed refractive index; and wherein switching a switchable lenticular lens of the switchable lenticular lens array to the OFF state comprises removing the first electrical potential applied between the electrodes to remove the electric field in the first direction, so as to control the electrically controlled refractive index of the second material layer to have a refractive index that matches the fixed refractive index.

In some embodiments, switching the switchable lenticular lens of the switchable lenticular lens array to the OFF state comprises applying a second electrical potential between the electrodes to make the second material layer in an electric field in a second direction, so as to control the electrically controlled refractive index of the second material layer to have the refractive index that matches the fixed refractive index, wherein the first direction is orthogonal to the second direction.

In some embodiments, one of the upper electrode and the lower electrode covers an entire area of the switchable lenticular lens array, and the other of the upper electrode and the lower electrode comprises two layers of electrodes, first and second layers of electrodes of the two layers of electrodes are interleaved over the entire area of the switchable lenticular lens array, wherein the second electrical potential is applied between the first layer of electrodes and the second layer of electrodes.

In some embodiments, the upper electrode and the lower electrode each comprises two layers of electrodes, first and second layers of electrodes of the two layers of electrodes being interleaved over the entire area of the switchable lenticular lens array, wherein a second electrical potential is applied between the two layers of the upper electrode and/or between the two layers of the lower electrode.

In some embodiments, the first layer of electrodes and the second layer of electrodes of the two layers of electrodes each comprises strip electrodes spaced apart from one another, and the strip electrodes of the first layer of electrodes and the strip electrodes of the second layer of electrodes are interleaved with each other over the entire area of the switchable lenticular lens array.

In some embodiments, one of the two layers of electrodes covers the entire area of the switchable lenticular lens array, and the other of the two layers of electrodes comprises strip electrodes spaced apart from one another.

In some embodiments, one of the two layers of electrodes that covers the entire area of the switchable lenticular lens array has a hollow pattern.

FIG. 8 illustrates a flowchart of a method 800 of operating a 2D/multiview switchable lenticular display in an example, according to an embodiment consistent with the principles described herein. As illustrated in FIG. 8, the method 800 of operating the 2D/multiview switchable lenticular display comprises providing two-dimensional (2D) image content and multiview image content using a display panel 810. In some embodiments, the display panel may be substantially similar to the display panel 102 described above with reference to FIG. 2.

The method 800 of operating the 2D/multiview switchable lenticular display shown in FIG. 8 further comprises applying a first electrical potential between the electrodes of the switchable lenticular lens array when the display panel provides the 2D image content so that the second material layer of the switchable lenticular lens array is in an electric field in a first direction, so as to switch the electrically controlled refractive index of the second material layer to a refractive index that matches the fixed refractive index of the first material layer 820. In some embodiments, the display panel may be substantially similar to the display panel 102 described above with reference to FIG. 2. In some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D. In some embodiments, the first electrical potential may be substantially similar to the voltage provided by the second power supply 634 described above with reference to FIGS. 6A-6D.

The method 800 of operating the 2D/multiview switchable lenticular display shown in Fig. 8 further comprises applying a second electrical potential between the electrodes when the display panel provides the multiview image content so that the second material layer is in an electric field in a second direction, so as to switch the electrically controlled refractive index of the second material layer to a refractive index different from the fixed refractive index, wherein the second direction is orthogonal to the first direction 830. In some embodiments, the display panel may be substantially similar to the display panel 102 described above with reference to FIG. 2. In some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D. In some embodiments, the second electrical potential may be substantially similar to the voltage provided by the power supply 430 described above with reference to FIGS. 4A-4B and the voltage provided by the first power supply 630 described above with reference to FIGS. 6A-6D.

Thus, there have been described examples and embodiments of a switchable lenticular lens array and a method of operating a switchable lenticular lens array that provide manners configured to shorten a switching response time of the switchable lenticular lens array. For example, embodiments are directed to processing a multiview image so that it displayed in two modes (e.g., a 2D mode and a multiview mode) of a 2D/multiview switchable lenticular display resulting in a composite multiview image. It should be understood that the above-described examples are merely illustrative of some of the many specific examples and embodiments that represent the principles described herein. Clearly, those skilled in the art can readily devise numerous other arrangements without departing from the scope as defined by the following claims.

## Claims

1. A switchable lenticular lens array comprising:
a first material layer having a fixed refractive index;
a second material layer having an electrically controlled refractive index; and
electrodes configured to deliver a voltage or a current to switch the state of switchable lenticular lenses of the switchable lenticular lens array, wherein the electrodes include an upper electrode and a lower electrode;
wherein the second material layer is disposed in an electric field in a first direction when a first electrical potential is applied between the electrodes such that the electrically controlled refractive index of the second material layer is switched to a refractive index that matches the fixed refractive index.

2. The switchable lenticular lens array of claim 1, wherein the second material layer is disposed in an electric field in a second direction when a second electrical potential is applied between the electrodes such that the electrically controlled refractive index of the second material layer is switched to a refractive index different from the fixed refractive index, wherein the second direction is orthogonal to the first direction.

3. The switchable lenticular lens array of claim 1 or 2, wherein the first material layer comprises fixed lenses of the switchable lenticular lens array, and the second material layer is in contact with the first material layer and fills in shapes of the fixed lenses of the switchable lenticular lens array.

4. The switchable lenticular lens array of claim 1 or 2, wherein the first material layer and the second material layer are disposed between the upper electrode and the lower electrode.

5. The switchable lenticular lens array of claim 1, wherein one of the upper electrode and the lower electrode covers an entire area of the switchable lenticular lens array, and the other of the upper electrode and the lower electrode comprises a first set of electrodes and a second set of electrodes interleaved over the entire area of the switchable lenticular lens array, wherein the first electrical potential is applied between the first set of electrodes and the second set of electrodes.

6. The switchable lenticular lens array of claim 1, wherein the upper electrode and the lower electrode each comprises a first set of electrodes and a second set of electrodes interleaved
over an entire area of the switchable lenticular lens array, wherein the first electrical potential is applied between the first set of electrodes and the second set of electrodes of the upper electrode and/or between the first set of electrodes and the second set of electrodes of the lower electrode.

7. The switchable lenticular lens array of claim 5 or 6, wherein the first set of electrodes and the second set of electrodes each comprises strip electrodes that are spaced apart from one another, the strip electrodes of the first set of electrodes and the strip electrodes of the second set of electrodes are interleaved with each other over the entire area of the switchable lenticular lens array.

8. The switchable lenticular lens array of claim 5 or 6, wherein the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

9. The switchable lenticular lens array of claim 8, wherein one of the first layer of electrodes and the second layer of electrodes that covers the entire area of the switchable lenticular lens array has a hollow pattern.

10. The switchable lenticular lens array of claim 5 or 6, wherein the first set of electrodes and the second set of electrodes are arranged in the same layer, the electrodes in the first set of electrodes and the electrodes in the second set of electrodes are interleaved with each other, and a gap is provided between electrodes in the first set of electrodes and adjacent electrodes in the second set of electrodes.

11. A method of operating a switchable lenticular lens array comprising a first material layer having a fixed refractive index, a second material layer having an electrically controlled refractive index, and electrodes, wherein the method comprises:
applying a first electrical potential between the electrodes so that the second material layer is in an electric field in a first direction, so as to switch the electrically controlled refractive index of the second material layer to a refractive index that matches the fixed refractive index.

12. The method of claim 11, wherein the method comprises:
applying a second electrical potential between the electrodes so that the second material layer is in an electric field in a second direction, so as to switch the electrically controlled refractive index of the second material layer to a refractive index different from the fixed refractive index, wherein the second direction is orthogonal to the first direction.

13. A 2D/multiview switchable lenticular display, comprising:
a display panel having an array of display pixels;
a switchable lenticular lens array for directing outputs from different pixels of the array of display pixels to spatial positions for displaying a two-dimensional (2D) image or a multiview image, wherein the switchable lenticular lens array comprises:
a first material layer having a fixed refractive index;
a second material layer having an electrically controlled refractive index; and
electrodes configured to deliver a voltage or a current to switch the state of switchable lenticular lenses of the switchable lenticular lens array, wherein the electrodes include an upper electrode and a lower electrode; and
a controller configured to apply a first electrical potential between the electrodes when the display panel provides 2D image content such that the second material layer is in an electric field in a first direction, so as to switch the electrically controlled refractive index of the second material layer to a refractive index that matches the fixed refractive index.

14. The 2D/multiview switchable lenticular display of claim 13, wherein the controller is configured to apply a second electrical potential between the electrodes when the display panel provides multiview image content such that the second material layer is in an electric field in a second direction, so as to switch the electrically controlled refractive index of the second material layer to a refractive index different from the fixed refractive index, wherein the second direction is orthogonal to the first direction.

15. The 2D/multiview switchable lenticular display of claim 13 or 14, wherein the first material layer comprises fixed lenses of the switchable lenticular lens array, and the second material layer is in contact with the first material layer and fills in shapes of the fixed lenses of the switchable lenticular lens array.

16. The 2D/multiview switchable lenticular display of claim 13 or 14, wherein the first material layer and the second material layer are disposed between the upper electrode and the
lower electrode.

17. The 2D/multiview switchable lenticular display of claim 13, wherein one of the upper electrode and the lower electrode covers an entire area of the switchable lenticular lens array, and the other of the upper electrode and the lower electrode comprises a first set of electrodes and a second set of electrodes interleaved over the entire area of the switchable lenticular lens array, wherein the first electrical potential is applied between the first set of electrodes and the second set of electrodes.

18. The 2D/multiview switchable lenticular display of claim 13, wherein the upper electrode and the lower electrode each comprises a first set of electrodes and a second set of electrodes interleaved over an entire area of the switchable lenticular lens array, wherein the first electrical potential is applied between the first set of electrodes and the second set of electrodes of the upper electrode and/or between the first set of electrodes and the second set of electrodes of the lower electrode.

19. The 2D/multiview switchable lenticular display of claim 17 or 18, wherein the first set of electrodes and the second set of electrodes each comprises strip electrodes that are spaced apart from one another, the strip electrodes of the first set of electrodes and the strip electrodes of the second set of electrodes are interleaved with each other over the entire area of the switchable lenticular lens array.

20. The 2D/multiview switchable lenticular display of claim 17 or 18, wherein the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

21. The 2D/multiview switchable lenticular display of claim 20, wherein one of the first layer of electrodes and the second layer of electrodes that covers the entire area of the switchable lenticular lens array has a hollow pattern.

22. The 2D/multiview switchable lenticular display of claim 17 or 18, wherein the first set of electrodes and the second set of electrodes are arranged in the same layer, the electrodes in the first set of electrodes and the electrodes in the second set of electrodes are interleaved with
each other, and a gap is provided between electrodes in the first set of electrodes and adjacent electrodes in the second set of electrodes.

23. A method of operating a 2D/multiview switchable lenticular display comprising a display panel and a switchable lenticular lens array comprising a first material layer having a fixed refractive index, a second material layer having an electrically controlled refractive index, and electrodes, wherein the method comprises:
providing two-dimensional (2D) image content and multiview image content using a display panel;
applying a first electrical potential between the electrodes when the display panel provides the 2D image content so that the second material layer is in an electric field in a first direction, so as to switch the electrically controlled refractive index of the second material layer to a refractive index that matches the fixed refractive index.

24. The method of claim 23, wherein the method comprises:
applying a second electrical potential between the electrodes when the display panel provides the multi-view image content so that the second material layer is in an electric field in a second direction, so as to switch the electrically controlled refractive index of the second material layer to a refractive index different from the fixed refractive index, wherein the second direction is orthogonal to the first direction.
